# DEMANDE DE BREVET EUROPEEN

(11) **EP 4 657 991 A1**
(43) Date de publication de la demande: **03.12.2025**
(21) Numéro de dépôt: 24315251.9
(22) Date de dépôt: 29.05.2024
(51) Int. Cl.: H05B 47/105, H05B 47/11, H05B 47/115, H05B 47/19

(54) **LAMPE FRONTALE DOTÉE D'UNE INTERFACE UTILISATEUR AMÉLIORÉE**

(71) Demandeur: Zedel, 38920 Crolles (FR)
(72) Inventeur: Beaurent, Nicolas, 38570 La Pierre (FR)
(74) Mandataire: Schuffenecker, Thierry

(57) **Abrégé**

- une source lumineuse (231);
- un module de puissance (230) pour générer une alimentation en courant de ladite source lumineuse (231),
- un module de commande (220) pour le réglage de l'intensité lumineuse générée par ladite source lumineuse;
un capteur de lumière (120) permettant de capter la lumière de l'environnement du porteur de la lampe, ledit module de commande (220) commandant la luminosité de la lampe en fonction de l'information générée par le capteur de lumière (120),
- un accéléromètre (110) configuré pour fournir à intervalles réguliers des données représentatives d'une accélération de la lampe frontale transmises au module de commande configuré pour les traiter ces données suivant au moins un axe horizontal, avec un filtrage passe-haut dans le but de détecter un double pic intervenant dans un délai prédéfini, permettant le déclenchement d'un accroissement temporaire de luminosité.

## Description

### Domaine Technique

La présente invention concerne le domaine des lampes frontales dotées d'une technologie d'éclairage dynamique ou réactif, et notamment une lampe frontale comportant un capteur accélérométrique, et plus spécifiquement une interface utilisateur améliorée.

### Etat de la Technique

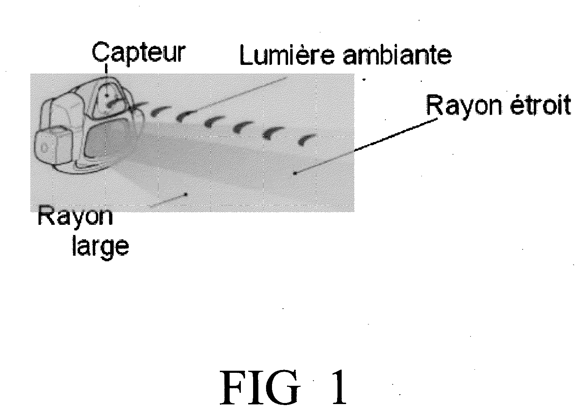

La demanderesse de la présente demande de brevet a commercialisé une lampe portative, de type lampe frontale, dotée d'un éclairage dit *réactif* ou *dynamique* dont le principe de fonctionnement est illustré dans la figure 1. Cette lampe frontale comporte un circuit électronique doté d'un capteur qui analyse la luminosité extérieure pour délivrer instantanément une puissance d'éclairage réglée ainsi qu'une géométrie de faisceau optimale pour la situation considérée.

Ce type de lampes s'est avéré être particulièrement adapté aux activités et sports intensifs car elles soulagent l'utilisateur des réglages en mode manuel qui seraient nécessaires pour commuter entre différents seuils de puissance de faisceaux. En particulier, elles permettent à un utilisateur de garder les mains libres et l'esprit totalement concentré sur l'activité qui est la sienne et ce quelle que soit la situation d'éclairage considérée.

En éclairage de proximité par exemple, l'utilisateur peut ainsi observer ou examiner un objet à courte distance (lecture d'une carte, confection d'un noeud d'encordement ou montage d'une tente par exemple) et la lampe peut protéger un faisceau lumineux très large et peu puissant, fixé automatiquement à une valeur seuil minimale grâce à cette technique d'éclairage dynamique. L'éclairage s'adapte automatiquement à la distance de l'objet.

En revanche, en situation de mouvement par exemple lorsque l'utilisateur s'adonne à la marche ou la course à pied, le faisceau devient mixte: large au niveau des pieds et focalisé pour voir à quelques mètres et anticiper le relief. En outre, lorsque l'utilisateur se trouve en situation de vision lointaine, il relève la tête pour voir au loin et rechercher par exemple une balise lors d'une course à pied ou encore un relais accroché à une paroi ; la puissance d'éclairage augmente considérablement et le faisceau devient focalisé pour assister au mieux l'utilisateur de la lampe.

On note enfin que la technique d'éclairage *réactif* ou *dynamique* s'est montrée à l'usage particulièrement économe et permet d'accroître avantageusement l'autonomie des batteries puisque sa mise en oeuvre, sous le contrôle d'un calculateur, vise à optimiser la consommation des batteries, offrant ainsi une plus grande autonomie de la lampe.

La demande de brevet EP21164886.0 déposée le 25 Mars 2021 par la demanderesse de la présente demande de brevet et publiée sous la référence EP4064792 (réf interne 313ep-ZED22ep) décrit une amélioration supplémentaire de cette technique d'éclairage réactif au moyen d'une intégration d'un accéléromètre qui permet de déterminer, au moyen d'une analyse statistique des données d'accélérométrie, un profil d'activité circonstancié autorisant un paramétrage optimal de la technique d'éclairage dynamique en fonction d'un profil automatiquement identifié.

Si cette identification automatique de profil et le paramétrage automatique qui en résulte améliore significativement la praticité de la lampe frontale, il demeure souhaitable, encore et toujours, d'accroître encore la flexibilité et l'ergonomie de l'interface utilisateur de cette lampe.

Tel est l'objet de la présente invention.

### Résumé de l'invention

La présente invention a pour but de proposer une amélioration significative de la technique d'éclairage dynamique en venant exploiter au maximum les possibilités offertes par un accéléromètre présent dans la lampe frontale.

Un autre but de la présente invention est de doter une lampe frontale, à éclairage dynamique ou non, d'un accéléromètre et d'une unité de commande configurée pour réaliser une nouvelle interface utilisateur très intuitive pour un utilisateur.

C'est un autre but de la présente invention que de réaliser une lampe frontale doté d'un accéléromètre qui est configurée pour permettre une génération immédiate et temporaire d'un surcroît de luminosité sur demande de l'utilisateur.

L'invention réalise ces buts au moyen d'une lampe, telle qu'une lampe frontale, comportant
- une source lumineuse comportant une ou plusieurs diodes de type LED;
- un module de puissance pour générer une alimentation en courant de ladite source lumineuse, dans lequel le module de puissance est commandé par une information ou un signal de commande;
- un module de commande pour le réglage de l'intensité lumineuse générée par la source lumineuse;
- un capteur de lumière permettant de capter la lumière de l'environnement du porteur de la lampe, le module de commande étant configuré pour générer l'information ou le signal de commande en fonction de l'information générée par le capteur de lumière ;
- un accéléromètre qui est configuré pour fournir à intervalles réguliers des données représentatives d'une accélération de la lampe frontale.

Le module de commande est configuré pour stocker et traiter numériquement des données représentatives de l'accélération au moyen d'un filtrage numérique, comportant notamment un filtrage passe-haut permettant une détection d'un double pic dépassant un seuil prédéterminée durant une période définie sur au moins une séquence de données d'accélérométrique suivant un axe horizontal.

Lors de la détection d'un tel double pic au moins, le module de commande déclenche un accroissement temporaire de la luminosité de la lampe frontale durant une durée prédéfinie.

De préférence, la lampe comprend des moyens de communication avec un téléphone intelligent de manière à permettre une configuration des paramètres de fonctionnement de la lampe et notamment le réglage de la durée prédéfinie pendant laquelle le module de commande filtre les données d'accélérométrie pour détecter la présence de deux pics successifs.

Dans un autre mode de réalisation, le module de commande (220) est configuré pour détecter plusieurs séries de pics rapprochées dans le but d'identifier un code de commande de la lampe frontale.

De préférence, l'accéléromètre (110) génère des données d'accélérométrie suivant deux axes horizontaux X1, Z1 et suivant un axe vertical Y1 ; et le jeu de profils prédéterminés d'accélérométrie comportent des profils représentatifs de la marche, de la course à pied et de la bicyclette.

L'invention permet également la réalisation d'un procédé de régulation lumineuse d'une lampe frontale telle que définie dans l'une des revendications précédente, comportant les étapes :
- générer à intervalles réguliers un jeu de données d'accélérométrie µx , µy et µy fournies par ledit accéléromètre ;
- extraire lesdites données suivant au moins un axe horizontal µx ou µy et les stocker au sein d'une mémoire vive);
- effectuer un traitement numérique sur lesdites données stockées µx, µy comportant notamment un filtrage passe-haut dans le but de détecter une séquence d'au moins deux impulsions ou pics dépassant un seuil prédéterminé durant une durée prédéfinie ;

- en réponse à la dite détection, générer par ledit circuit de commande un signal de commande destiné à accroître la puissance lumineuse de la lampe ;
- lancer une temporisation de manière à limiter dans le temps la durée d'accroissement de la puissance lumineuse ;
- rétablir une luminosité normale à l'issue de l'expiration de ladite temporisation ; et
- boucler sur la première étape pour procéder au traitement de nouvelles données d'accélérométrie.

Dans un mode de réalisation particulier, la lampe frontale communique avec un téléphone mobile dans le but de venir paramétrer la lampe et rendre l'interface utilisateur programmable.

En particulier, le procédé comporte un mode d'apprentissage opérant hors mouvement de la lampe frontale dans lequel l'utilisateur tapote la lampe frontale au moyen d'un ou plusieurs doigts, dont notamment l'index et du pouce conjointement, et les impulsions accélérométriques qui en découlent sont analysées, traitées et filtrées le bloc de commande de manière à générer un vecteur d'impulsion accélérométrique de référence stocké en mémoire.

Le mode d'apprentissage comporte ensuite l'association de ce vecteur d'impulsion accélérométrique de référence avec une instruction d'une commande spécifique de la lampe frontale définie durant la communication avec le téléphone mobile.

En dehors du mode d'apprentissage et en mode d'utilisation de la lampe frontale, le module de commande analyse les données d'accélérométrie µx , µy et µy reçues en temps réel du capteur accélérométrique et opère un traitement et un filtrage numérique adhoc de manière à en extraire un vecteur accélérométrique correspondant à une combinaison spécifique d'un mouvement de tapotage du couple pouce/index et, finalement, être mappé avec une commande spécifique stockée en mémoire. Dès lors qu'un mappage aboutit, le module de commande exécute la commande correspondante au vecteur accélérométrique identifié.

### Description des dessins

D'autres caractéristiques, but et avantages de l'invention apparaîtront à la lecture de la description et des dessins ci-après, donnés uniquement à titre d'exemples non limitatifs. Sur les dessins annexés :
La figure 1 illustre le schéma de principe de l'éclairage dynamique ou réactif connu dans l'état de la technique.
La figure 2 représente une architecture générale d'une lampe frontale incorporant un capteur de luminosité ainsi qu'un capteur accélérométrique, et adapté pour la mise en oeuvre des étapes de procédé de la présente invention.
La figure 3 illustre un premier procédé de réalisation permettant une commande temporaire d'accroissement de luminosité.
La figure 4 illustre un mode de réalisation particulier d'une architecture générale du traitement des données d'accélérométrie dans le but d'extraire un vecteur accélérométrique de référence susceptible d'être associé à un code de commande.
La figure 5 illustre un procédé d'apprentissage d'une lampe frontale basée sur une analyse des données d'accélérométrie extraites du capteur accélérométrique, en vue d'enregistrer une instruction de commande en relation avec un tapotement prédéterminé défini conjointement par un ou plusieurs doigts de l'utilisateur.
La figure 6 illustre un procédé de commande d'une lampe frontale basée sur une analyse des données d'accélérométrie extraites du capteur accélérométrique, en vue d'une extraction d'une instruction de commande et de son exécution automatique.

### Description des modes de réalisation préférés

L'on décrit à présent comment l'on peut significativement améliorer une lampe frontale dotée d'un système d'éclairage réactif ou dynamique et intégrant un accéléromètre comme décrit la demande de brevet européen EP21164886.0 dont le contenu est intégré dans la présente demande par simple référence.

### I. Architecture générale

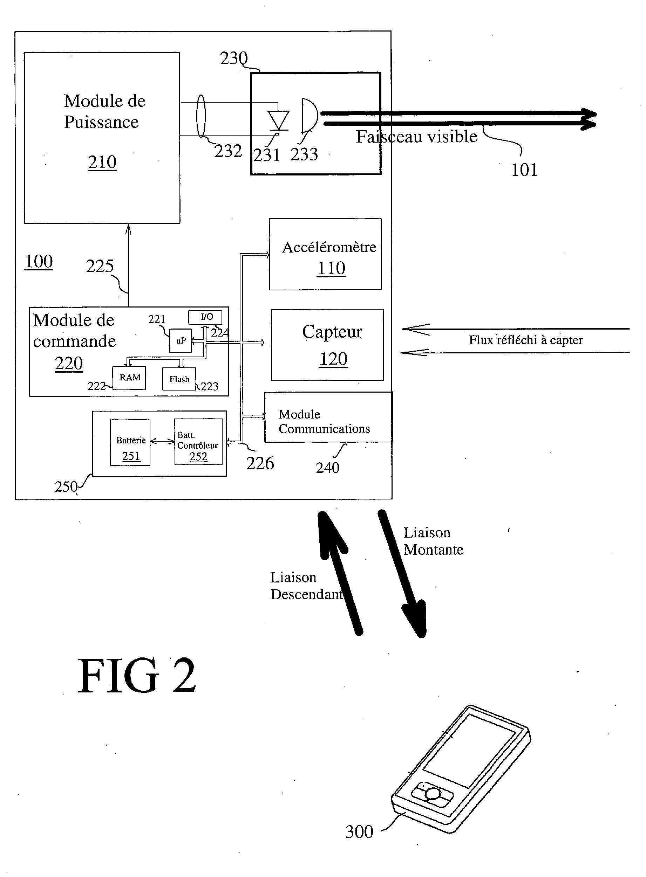

La **figure 2** illustre l'architecture physique générale d'un mode de réalisation d'une lampe 100 - supposée frontale - comportant un système de régulation réactif ou dynamique de l'intensité lumineuse basé sur un capteur 120 permettant de mesurer la luminosité ambiante et/ou une partie du flux réfléchi par l'éclairage de la lampe frontale.

La lampe 100 comporte un capteur accélérométrique, et de préférence un capteur d'accélération tridimensionnelle (3D) 110 permettant de générer des informations d'accélérométrie suivant au moins un axe et de préférence trois axes X1, Y1, Z1, les axes X1 et Z1 étant horizontaux et l'axe Y1 étant vertical.

Plus spécifiquement, la lampe 100 comprend un module de puissance 210 associé à un module de commande 220 et une unité d'éclairage 230 comportant au moins une diode électroluminescente LED et, optionnellement, un module émetteur-récepteur 240 couplé au module de commande et un module de batterie 250 lui aussi couplé au module de commande 220.

Dans l'exemple de la figure 2, l'unité d'éclairage 230 comporte une unique diode LED 231 dotée de son circuit d'alimentation 232 connecté au module de puissance 210. Clairement, plusieurs diodes pourront être envisagées pour l'obtention d'un faisceau de forte luminosité. D'une manière générale, la ou les diodes LED(s) peuvent être associée(s) à une optique focale propre 233 permettant d'assurer une collimation du faisceau lumineux généré.

Dans un mode de réalisation spécifique, l'alimentation en courant de la diode LED 231 via le circuit 232, est effectuée par le module de puissance sous la commande d'une information ou d'un signal de commande généré par le module de commande 220 via un lien qui pourra prendre la forme d'un conducteur ou d'un ensemble de conducteurs constituant un bus. La figure montre plus particulièrement l'exemple particulier d'un conducteur 225.

Le module de puissance 210 comporte spécifiquement tous les composants que l'on rencontre conventionnellement dans une lampe d'éclairage à LEDs pour la production d'un faisceau lumineux de forte intensité, et en général basée sur la Modulation en Largeur d'impulsion MLI (ou *Puise Width Modulation* dans la littérature anglo-saxonne), bien connue d'un homme du métier et similaire à celle que l'on rencontre dans les circuits audio de classe D. Cette modulation MLI est commandée au moyen du signal de commande 225 généré par le module de commande 220. D'une manière générale, l'on notera que le terme "*signal*" mentionné précédemment renvoie à une grandeur électrique - courant ou tension - permettant de provoquer la commande du module de puissance, et notamment la modulation MLI servant à alimenter en courant la diode LED 231. Il ne s'agit ici que d'un mode particulier de réalisation, étant entendu qu'il sera possible de substituer au *"signal de commande 225"* toute *"information de commande",* par exemple une information logique stockée dans un registre et transmise comme cela a été dit par tout moyen approprié au module de puissance 210 dans le but de commander la puissance d'émission du faisceau lumineux. Le signal de commande peut donc être émis sur différents supports selon qu'il s'agit d'un signal ou d'une information. Ces supports peuvent être une ligne de communication de type bus couplant le module de commande et le module de puissance ou un simple circuit électronique de transfert d'une tension ou intensité de contrôle. Dans un mode de réalisation particulier, l'on pourra même envisager que les deux modules de commande et de puissance soient intégrés dans un même module ou circuit intégré.

Un homme du métier comprendra donc aisément que lorsque l'on se réfère à un *"signal de commande 225",* l'on englobe indistinctement les réalisations recourant à une grandeur électrique de commande - courant ou tension - ainsi que les réalisations dans lesquelles la commande est réalisée au moyen d'une information logique transmise au sein du circuit de puissance. Pour cette raison, l'on parlera ci-après indistinctement de *signal* ou *d'information* de commande.

D'une manière générale, les composants qui composent le module de puissance 210 - commutateurs et circuits - sont bien connus d'un homme du métier et l'exposé sera délibérément allégé à cet égard dans un souci de concision. De même, le lecteur sera renvoyé aux ouvrages généraux traitant des divers aspects de la modulation MLI (ou PWM).

En revenant à la figure 2, l'on voit que le module de commande 220 comporte un processeur 221 ainsi que des mémoires volatiles 222 de type RAM et non-volatile (flash, EEPROM) 223 ainsi qu'un ou plusieurs circuits d'entrée/sortie 224. Les mémoires RAM et non volatiles sont destinées au stockage de données et d'instructions de microprogramme ou micro logiciel. Dans un mode de réalisation particulier, tel que décrit dans la demande de brevet européen EP21164886.0 incorporée dans la présente par simple référence, la mémoire non volatile 223 sert également au stockage de données représentatives de profils d'activités physiques qui seront utilisées conjointement avec les données d'accéléromètrie fournies par le capteur accélérométrique 110 comme cela sera décrit plus loin.

La lampe frontale comporte par ailleurs un module batterie 250 disposant d'un contrôleur 252 et d'une batterie 251 par exemple de type Ion-Lithium.

D'une manière générale, le module de commande 220 peut accéder à chacun des autres modules présents dans la lampe, et notamment au module de puissance 210, au module de batterie 250, aux deux capteurs de luminosité 120 et d'accélérométrie 110 ainsi que, le cas échéant, au module de communication 240 permettant une communication bi-directionnelle (montante - descendante) sans fil avec un téléphone intelligent 300 ou tout autre dispositif de communication sans fil .

De préférence, le module de commande intégrera dans sa mémoire interne des micro logiciels spécifiques permettant la mise en oeuvre des procédés décrits ci-après, dans le but de réaliser une nouvelle interface utilisateur particulièrement performante et qui, de surcroît, sera programmable.

L'accès du module de commande 220 aux différents composants de la lampe frontale pourra prendre des formes diverses, soit au moyen de circuits et/ou conducteurs spécifiques ou ensembles de conducteurs formant un bus.

En accédant aux différents modules composant la lampe frontale, le module de commande 220 peut à la fois lire et collecter des informations contenues dans chacun de ces modules et/ou inversement, venir y transférer des informations, des données et/ou des commandes, et de manière plus générale implémenter les différentes étapes de procédé d'une interface utilisateur qui sera décrite plus loin de manière précise.

C'est ainsi que le module de commande 220 peut envoyer au module de puissance un signal de commande comme cela est représenté par le signal transmis sur le lien 225 et, plus généralement, peut lire la valeur courante du courant d'alimentation de la diode 231 transitant via les conducteurs 232 (via des circuits et/ou bus non représentés sur la figure).

De manière similaire, le module de commande 220 peut accéder au module de batterie 250 via le bus 226 pour y lire soit les différentes valeurs de tension (suivant le cycle charge ou décharge en cours) aux bornes de celle-ci et/ou la valeur de l'intensité délivrée afin de pouvoir en calculer un état de charge (SOC ou *State Of Charge* dans la littérature anglo-saxonne).

### II. Module de communication 240

Le module de commande 220 comporte un module de communication 240 permettant une liaison bidirectionnelle sans fil avec un système de traitement de l'information mobile ou téléphone mobile 300. Dans un mode de réalisation privilégié, l'émetteur ainsi que le récepteur seront compatibles avec le standard *Bluetooth,* de préférence avec le standard *Bluetooth 4.0 Low energy.* Dans un autre mode de réalisation, on adoptera plutôt le standard WIFI ou IEEE802.11. Le module 240 comporte une unité bande de base (non illustrée) couplée à un récepteur et à un émetteur sans fil, permettant d'organiser un canal de communication montant (liaison montante- *Uplink*) vers le téléphone mobile 300 et, dans le sens contraire, un canal de communication descendant (*Downlink*) vers ce même téléphone. A cet effet, le module de communication 240 peut être amené à effectuer divers traitements, en série ou en parallèle, sur la représentation numérique du signal reçu et à transmettre, et notamment, des opérations de filtrage, de calcul statistique, de démodulation, de codage/décodage canal permettant de rendre la communication robuste au bruit, etc... De telles opérations sont bien connues dans le domaine du traitement du signal, notamment lorsqu'il s'agit d'isoler une composante particulière d'un signal, susceptible de porter une information numérique, et il ne sera pas nécessaire ici d'alourdir l'exposé de la description.

Une fois détectés, ces paquets sont transférés au processeur 221 au sein du module de commande 220.

Le processeur 221 est donc chargé de l'interprétation des paquets reçus ainsi que de la mise en forme de paquets pour l'émission selon un format spécifique au standard utilisé. Ainsi dans le cas du standard Bluetooth Low Energy, ces paquets auront une structure autour du *Generic Attribute Profile* (GATT) standardisé que l'on ne détaillera pas ici. En fonction de l'interprétation des bits de données inclus dans les paquets reçus, le processeur va reconstruire les éventuelles informations ou commandes reçues sur la liaison descendante en provenance du système de traitement de l'information mobile 300. Ayant interprété ces informations ou commandes, le processeur 221 va ensuite relayer ou convertir cette information ou commande vers le module concerné. Ainsi dans le mode de réalisation de base, le processeur 221 identifie des commandes à l'attention du module de puissance 210 afin de modifier l'intensité lumineuse et en réaction à cette identification est susceptible de générer une information de commande sur le conducteur 225 à destination du module de puissance 210 afin que ce dernier procède à la modification de l'intensité lumineuse générée par l'unité d'éclairage 230.

En outre, le processeur 221 peut aussi identifier des requêtes de lecture émises par le système de traitement de l'information mobile associé 300 afin que la lampe frontale envoie certains paramètres vers le téléphone 300 sur la liaison montante.

Ces requêtes peuvent ainsi être une requête d'état de charge de la batterie ou de la valeur de la puissance lumineuse actuelle. Dans ce cas, le processeur 221 va récupérer les informations nécessaires directement auprès du module concerné et après avoir réalisé d'éventuels calculs supplémentaires sur ces informations pour obtenir l'information requise finale (dans le cas de l'état de charge par exemple comme on l'a vu ci-dessus), va mettre en forme un paquet de données correspondant pour l'émission par le module émetteur-récepteur 240.

Il est clair que la figure 2 décrit un mode de réalisation de base, et que bien d'autres modes de réalisation sont possibles et à la portée d'un homme du métier. Par exemple, dans un mode plus sophistiqué, d'autres modules pourront être ajoutés au sein de la lampe frontale et ces modules seront aussi couplés au processeur 221 via le bus 226 par exemple. Ces modules pourront alors aussi échanger en liaison montante ou descendante des données ou commandes avec le système de traitement de l'information mobile associé 300 qui pourra alors communiquer avec la lampe frontale et lui transmettre diverses commandes de configuration au moyen d'une application dédiée s'exécutant sur le téléphone intelligent. Cette application dédiée permet alors de coordonner les différentes fonctionnalités de la lampe frontale en offrant notamment une interface conviviale avec l'utilisateur au moyen de laquelle ce dernier pourra soit entrer des paramètres de fonctionnement, soit venir directement commander la lampe frontale ou sélectionner différentes options pour les fonctionnalités offertes.

Dans un mode de réalisation préféré, la lampe frontale est configurée pour entrer en communication avec le téléphone intelligent dans le but d'ouvrir une session d'apprentissage au cours de laquelle l'utilisateur pourra enregistrer une combinaison de tapotement de doigts sur la lampe frontale et associer cette combinaison à une ou plusieurs instructions de commande.

Il en découlera alors une nouvelle possibilité d'interface utilisateur qui viendra avantageusement enrichir et améliorer le mécanisme de régulation dynamique de la lampe frontale.

### III. Régulation de l'éclairage dynamique ou réactif

Il convient de rappeler que le module de commande 220 de la lampe frontale 100 met en oeuvre une technique d'éclairage dynamique ou réactif. Cette technique consiste à substituer aux modes de réglages manuels bien connus - basés sur diverses valeurs de puissance lumineuse préréglées telle que *faible, moyenne* ou *forte,* une technique plus automatique permettant de laisser le réglage de la puissance lumineuse au module de commande 220 et plus spécifiquement à un algorithme de régulation exécuté par le processeur 221 sous la commande d'un micro-logiciel de régulation stocké en mémoire non volatile 223.

Suivant le principe de l'éclairage dynamique ou réactive, le processeur 221 vient régler la puissance lumineuse en fonction de la valeur de la luminosité ambiante mesurée par le capteur 120, par exemple en venant sélectionner une valeur choisie parmi un jeu de N valeurs seuils prédéfinis. Un tel mécanisme de régulation s'apparente donc à un mécanisme de réglage par pas discrets au sein d'un jeu fini de valeurs de puissance, permettant au module de commande 220 de venir piloter la lampe frontale en passant successivement d'une valeur de réglage à une autre valeur choisie dans le jeu de valeurs prédéterminées.

Avec un jeu de trois valeurs de réglage prédéterminées, correspondant à trois puissances, par exemple « *faible* », « *moyenne* » ou « *forte* », le mécanisme de luminosité réactif ou dynamique permet donc le réglage automatique de la lampe frontale sur la bonne valeur au sein des N valeurs prédéterminées.

De la même manière, la géométrie du faisceau lumineux pourra être réglée automatiquement par la sélection, via le module de commande 220, d'un mode de diffusion choisi parmi un jeu de plusieurs modes prédéterminés, par exemple *large, étroit,* voire même les deux en même temps.

Une telle régulation dynamique ou réactive, par pas discrets, s'avère simple et bon marché à mettre en oeuvre et permet une commutation automatique entre des valeurs seuils prédéfinies.

Pour autant, un homme du métier pourra envisager un mécanisme de régulation plus sophistiqué basée sur un véritable asservissement venant intégrer la valeur de la luminosité au sein d'une boucle de contre-réaction qui pourra être linéaire ou non, afin de venir fixer la puissance du faisceau lumineux généré par le module 230. A cet égard, des mécanismes de correction d'erreur pourront être opportunément intégrés au sein de la boucle de contre-réaction, notamment une correction proportionnelle (P), proportionnelle-intégrale (PI), voire Proportionnelle intégrale différentielle (PID) etc, employées avec des paramètres adéquats.

Quel que soit le type de régulation lumineuse envisagée, par pas discrets ou au moyen d'un asservissement linéaire ou non-linéaire, la régulation de l'éclairage dynamique ou réactif pourra être avantageusement améliorée en venant introduire, comme on va le voir à présent en détail, une exploitation des données d'accélérométrie µx, µy et µz générées par le capteur accélérométrique tridimensionnel 110, comme cela va être décrit à présent pour venir augmenter immédiatement et significativement, sur demande de l'utilisateur, la puissance lumineuse de la lampe.

Au-delà de cet apport immédiat d'un supplément de lumière, l'on pourra même, comme on le verra plus loin, réaliser une nouvelle interface utilisateur (interface homme-machine).

### IV. Collaboration de l'accéléromètre 110 pour la réalisation d'une nouvelle interface utilisateur programmable.

La demande de brevet européen EP21164886.0 décrit l'utilisation de l'accéléromètre pour permettre l'identification de profils d'utilisation prédéterminés dans le but de permettre un paramétrage optimal automatique de la lampe frontale. Grâce aux procédés décrits dans cette demande EP21164886.0, le module de commande 220 peut identifier, à partir des données statistiques fournies par l'accéléromètre, le profil idéal correspondant au mieux à une activité considérée (course à pied, marche , bicyclette etc...) et a y appliquer un paramétrage circonstancié et idéal.

Comme cela va être décrit à présent, l'on vient à présent ajouter à ce paramétrage optimal et automatique la réalisation d'une nouvelle interface utilisateur venant exploiter les données générées par l'accéléromètre.

D'une manière générale, le module d'accélérométrie tridimensionnel 110 fournit des signaux d'accélérométrie µx, µy et µz suivant trois axes trigonométriques X1, Y1 et Z1 et, de manière plus spécifique, les axes X1 et Z1 sont horizontaux tandis que l'axe Y1 est un axe vertical. Par ailleurs, les axes X1 et Y1 sont disposés dans un plan sagittal relativement à l'utilisateur.

Les inventeurs de la présente demande de brevet ont observé avantageusement que, en analysant les signaux µx, µy et µz , les séquences rapprochées de pics sur l'axe Z1 pouvaient intervenir fréquemment, tandis que ces mêmes séquences étaient beaucoup plus rares suivant les deux axes horizontaux X1 et Y1.

Par conséquent, les inventeurs ont décidé d'exploiter cette observation en intégrant un nouvel algorithme au sein du microprogramme logé dans la mémoire non volatile 223 du module de commande 220 de manière à permettre la détection sur une durée prédéfinie - de quelques centaines de millisecondes à une seconde au maximum - d'une séquence d'au moins deux impulsions ou pics dont l'amplitude dépasse un seuil prédéterminé sur l'un des deux signaux d'accélérométrie horizontaux µx ou µy , et d'utiliser cette détection comme élément de commande d'un accroissement temporaire et significatif de la luminosité de la lampe frrontale ( « accroissement *boost* »)

Cette détection d'un double pic ou impulsion au niveau du signal µx (par exemple) est effectué au moyen d'un traitement numérique approprié permettant de traiter, filtrer et stocker le signal numérique d'accélérométrie µx reçu de l'accéléromètre présent dans la lampe frontale.

Dans un mode de réalisation particulier, un tel filtrage numérique comporte un filtrage passe-haut permettant de déceler des variations rapides sur le signal numérique µx.

La détection d"un double « pic » au moins, ou double impulsion accélérométrique ayant une amplitude dépassant un niveau de seuil prédéterminé au niveau du signal µx, sera alors identifiée par le module de commande 220 comme étant la reconnaissance d'une « *double tape* » que ferait l'utilisateur de la lampe au moyen de ses doigts venant « tapoter » sur la lampe frontale.

Dans un mode de réalisation préféré, le module de commande utilise cette détection d'un double pic pour générer un signal de commande commandant un accroissement temporaire et significatif de la luminosité.

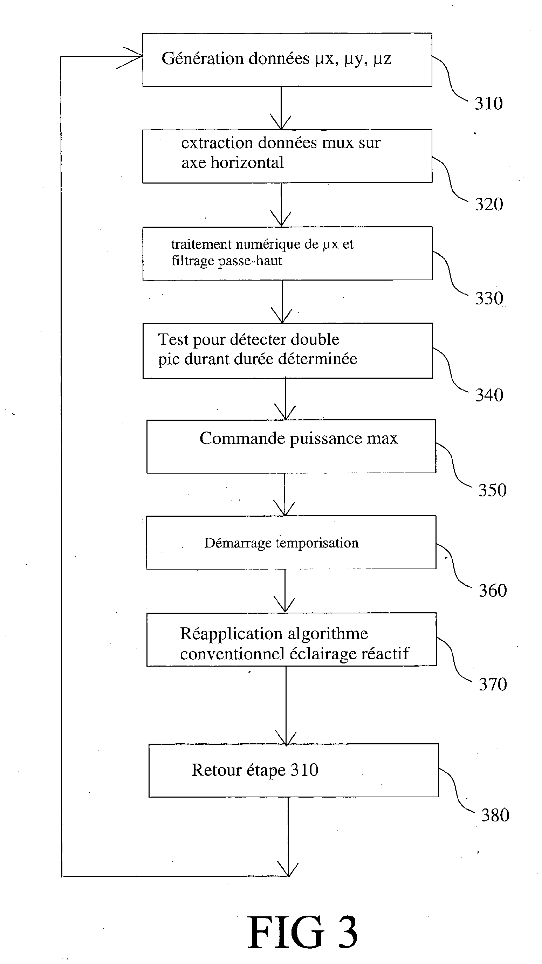

Le procédé est illustré plus particulièrement dans la figure 3 qui comporte une première étape 310 au cours de laquelle le module accélérométrique 110 génère des données d'accélérométrie µx, µy et µz qui sont ensuite respectivement stockées dans la mémoire vive 222 du module de commande 220.

Dans une étape 320, le processeur 221 extrait plus spécifiquement une séquence de données numérique sur au moins une composante horizontale, par exemple le signal µx, et stocke cette séquence spécifique dans une zone particulière de la mémoire vive 222.

Puis, dans une étape 330, le processeur procède à un traitement numérique adéquat de la séquence de données µx au moyen d'un microprogramme logiciel stocké en mémoire non volatile 223. En particulier, le traitement numérique comporte une série de filtrage dont un filtrage passe-haut permettant de faire apparaître des variations rapides sur le signal traité.

Le procédé procède ensuite avec une étape 340 qui est un test permettant de déterminer si, durant une durée préalablement définie, la séquence de données traitées µx comporte au moins un double pic significatif - ayant une amplitude dépassant un seuil prédéterminé - et qui pourrait alors être interprétée comme correspondant à une double « tapotement » effectué par un doigt de l'utilisateur suivant l'axe X1.

En cas de détection d'un tel double pic, le procédé passe alors à une étape 350 au cours de laquelle le module de commande 220 génère par l'intermédiaire de son processeur 221 un signal ou une information de commande sur le circuit 225 destiné à venir accroître significativement l'illumination de la lampe (éclairage « *boost* »).

Le procédé passe ensuite à une étape 360 qui est le démarrage d'une temporisation permettant de faire durer le surcroît d'éclairage (« *boost* ») pendant une durée prédéterminée.

Lors de l'expiration de la temporisation de l'étape 360, le procédé passe ensuite à une étape 370 dans laquelle le module de commande 220 rebascule en mode d'éclairage réactif conventionnel et applique la luminosité telle que définie par l'algorithme conventionnel d'éclairage réactif, en tenant compte des paramètres initiaux déterminés par les profils identifiés par le module accélérométrique 110: Cette étape 370 met donc un terme à l'éclairage « *boost* » provisoirement effectué.

Puis, dans une étape 380, le procédé boucle ensuite à l'étape de départ 310 pour effectuer le traitement d'une nouvelle analyse de données d'accélérométrie et permettre une nouvelle détection d'un double « tapotement » sur la séquences de signaux µx

Comme on le voit, le procédé de la figure 3 permet d'implémenter une nouvelle fonctionnalité, très simplement et sans nécessiter de nouveaux composants coûteux à mettre en oeuvre, qui réalise un accroissement temporaire de la luminosité de la lampe sur demande d'un utilisateur qui n'aura besoin que de venir tapoter à deux reprises la lampe frontale suivant l'axe X1 avec son doigt.

Il en résulte une ergonomie améliorée et une simplicité d'utilisation de la lampe frontale.

Cette ergonomie améliorée est déjà un premier avantage de la présente invention.

On va voir à présent qu'il est possible de venir améliorer encore d'avantage l'ergonomie de la lampe frontale en venant incorporer un traitement numérique supplémentaire allant jusqu'à réaliser une nouvelle interface utilisateur qui, de surcroît, pourra même être programmable.

En effet, dans un mode de réalisation alternatif, le procédé de détection intègre un algorithme permettant de venir détecter une séquence d'impulsions sur au moins deux signaux µx et µy , par exemple, qui correspondrait à une double tape réalisée conjointement par plusieurs doigts dont notamment le pouce et l'index opérant suivant leur opposition morphologique naturelle, suivant plusieurs axes mais selon un angle relativement précis lié à cette morphologie nature, et qui pourra être fort avantageusement stockée en mémoire lors d'un procédé d'apprentissage dans le but de permettre, ultérieurement, un décodage d'une instruction de commande.

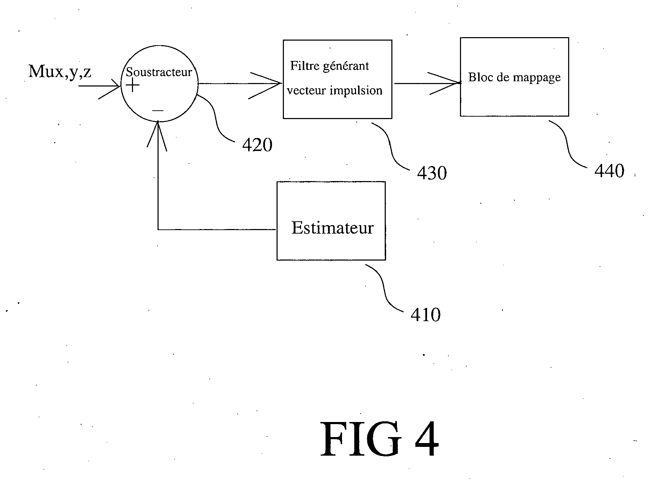

D'une manière générale, le traitement des données d'accélérométrie µx pourra utiliser de nombreuses techniques de traitement et de filtrage numérique bien connues d'un homme du métier. On pourra d'ailleurs traiter simultanément les trois composantes en tant que de besoin, comme cela est illustré dans le schéma d'architecture générale de la figure 4, montrant un bloc 410 recevant en temps réel les signaux µx, µy et µz généré par l'accéléromètre 110, lequel bloc 410 est chargé de générer un estimatif Ex, Ey,et Ez d'un vecteur d'accélération intégrant plusieurs séquences d'itérations de manière à construire un vecteur d'accélérométrie représentatif du mouvement induit par la marche ou la course de l'utilisateur.

Ce bloc 410 est utilisé dans une boucle de contre-réaction au moyen d'un bloc soustracteur 420 qui vient soustraire au vecteur d'accélérométrie µx, µy et µz généré en temps réel par l'accéléromètre 110 le résultat de l'estimation Ex, Ey,et Ez effectué par le bloc 410 afin de générer un vecteur d'accélération relatif µ'x, µ'y et µ'z qui concentre plus spécifiquement les variations rapides des impulsions accélérométriques provenant notamment des doigts de l'utilisateur.

Un bloc de filtrage 430 traite le vecteur d'accélération relatif µ'x, µ'y et µ'z de manière à générer un vecteur d'impulsion Ix, Iy et Iz qui sera présumé représentatif du tapotement rapide des doigts et pourra ensuite être transmis à un bloc de mappage 440.

Le bloc de mappage 440 effectue ensuite un mappage du vecteur d'impulsion Ix, Iy et Iz avec un motif qui aura été préalablement préenregistré en mémoire durant une phase d'apprentissage lors d'une session de communication avec un téléphone intelligent. Ce motif préalablement enregistré correspondra à un mouvement de doigts préalablement défini par l'utilisateur durant la phase d'apprentissage, et associé à une instruction de commande prédéterminée.

Le résultat du mappage permet alors au bloc de commande 220 d'extraire le code de cette instruction et, ultérieurement, d'exécuter la commande correspondante.

Les opérations de filtrage et de traitement numérique des données d'accélérométrie pourront utiliser plusieurs variantes ou techniques de filtrage numériques qui ne seront pas détaillées plus avant afin de ne pas alourdir l'exposé. On pourra d'ailleurs avantageusement mettre en oeuvre des techniques basées sur l'intellligence artificielle pour permettre d'affiner la construction du vecteur estimatif Ex, Ey,et Ez et y discriminer les contributions propres au tapotements spécifiques apportées par le jeu de tapotement émanant du couple pouce/index suivant leur opposition morphologique naturelle.

De manière concrète, en venant reproduire à nouveau un tel motif de tapotement spécifique réalisé au moyen du couple pouce/index, le module de commande pourra décoder les données d'accélérométrie correspondantes et en extraire le code de commande correspondant stocké en mémoire lors de la phase d'apprentissage décrite précédemment.

De cette manière, la lampe frontale pourra être avantageusement commandée lors même de son utilisation durant la marche/course de l'utilisateur.

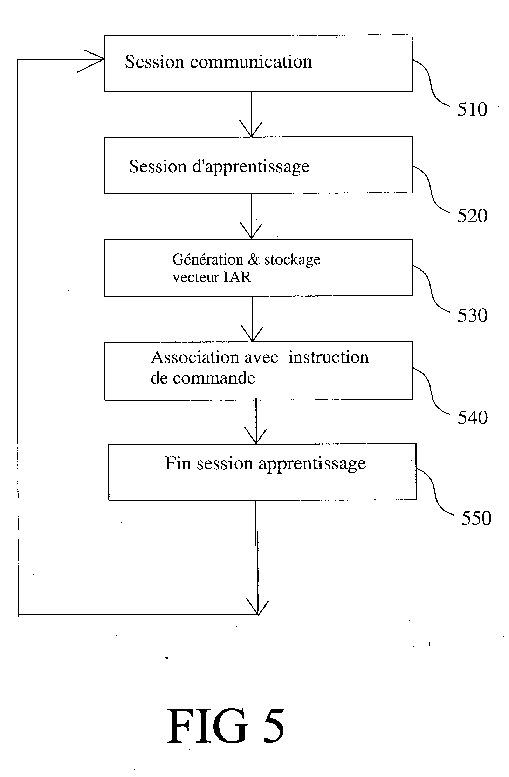

La figure 5 illustre plus spécifiquement un procédé d'apprentissage d'une instruction de commande pour une lampe frontale sur la base d'un traitement, d'une analyse et d'une détection de séquence d'impulsions ou pics sur les signaux d'accélérométrie µx, µy et µz.

Le procédé démarre par une étape 510 au cours de laquelle la lampe frontale entre dans une session de communication avec un téléphone intelligent.

Puis, dans une étape 520, le procédé entre dans une phase d'apprentissage opérant hors mouvement de la lampe frontale. Dans cette phase d'apprentissage, le module de commande 220 analyse et traite les données d'accélérométrie µx, µy et µz reçues en temps réel de l'accéléromètre 110 pendant que l'utilisateur opère un tapotement de référence au moyen d'un ou plusieurs doigts, et de préférence le couple pouce/index présentant une opposition morphologique naturelle qui se traduira par une corrélation particulière sur les signaux d'accélérométrie µx, µy et µz. Par ailleurs, des données temporelles correspondant à la fréquence de « tapotement », et propre à l'utilisateur seront également analysées et traitées durant la phase d'apprentissage.

Dans une étape 530, le module de commande 220 génère un vecteur d'impulsion accélérométrique de référence Ix, ly, Iz IARx,y,z correspondant à cet apprentissage, lequel est alors stocké en mémoire.

Puis, dans une étape 540, le procédé procède à une association entre le vecteur IARx,y,z et une instruction de commande prédéfinie par l'utilisateur, qui pourra être par exemple un accroissement immédiat de la luminosité, voire une extinction de la lampe etc... ;

La phase d'apprentissage s'achève ensuite avec une étape 550 et la session de communication avec le téléphone intelligent prend fin.

En dehors du mode d'apprentissage et en mode d'utilisation de la lampe frontale, le module de commande analyse les données d'accélérométrie µx , µy et µy reçues du capteur accélérométrique en temps réel et opère un traitement et un filtrage numérique adhoc de manière à en extraire un vecteur accélérométrique correspondant à une combinaison spécifique de tapotements du couple pouce/index, le cas échéant, pour finalement être mappé avec un vecteur d'impulsation accélérométrique de référence IARx,y,z stockée en mémoire. Dès lors qu'un mappage aboutit, le module de commande extrait la commande correspondante et l'exécute.

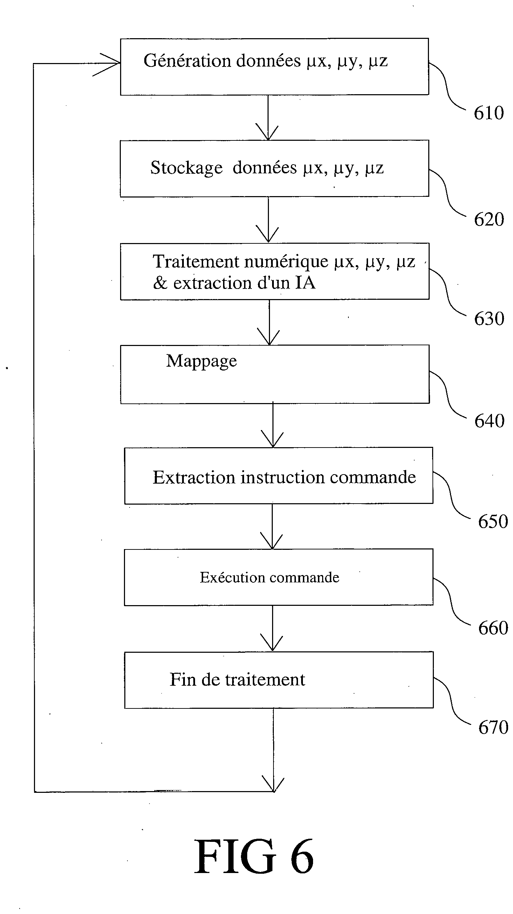

La figure 6 illustre plus spécifiquement le procédé de commande, qui démarre avec une étape 610 au cours de laquelle le module accélérométrique génère des données d'accélérométrie µx, µy et µz .

Puis, dans une étape 620, le processeur 221 stocke ces données au sein de la mémoire vive 222.

Ensuite, dans une étape 630, le processeur procède à un traitement numérique adéquat de ces données µx, µy et µz , incluant un ou plusieurs filtrage(s) numérique(s), de manière à en extraire un vecteur d'impulsion accélérométrique IAx,y,z qui pourrait correspondre à une combinaison spécifique d'un mouvement de tapotage du couple pouce/index

Le procédé procède ensuite avec une étape 640 qui est le mappage de ce vecteur d'impulsion accélérométrique IAx,y,z extrait dans l'étape 630 avec un vecteur accélérométrique de référence IARx,y,z stocké dans la mémoire, et qui correspond à une combinaison prédéterminée de tapotements du couple pouce/index sur la lampe frontale.

Puis, dans une étape 650, le module de commande 220 extrait l'instruction de commande associée au vecteur d'accélération de référence IARx,y,z stocké en mémoire et, dans une étape 660, la commande est exécutée automatiquement.

Puis, dans une étape 670, le procédé retourne à l'étape 610 pour le décodage potentiel d'une nouvelle commande.

Le procédé de la figure 6 vient par conséquent enrichir celui déjà décrit dans la figure 3 par l'exploitation simultanée et conjointe de tous les signaux d'accélérométrie µx, µy et µz générés par l'accéléromètre 110, et le mappage de ces mêmes signaux et des pics que ceux-ci comportent avec un vecteur IARx,y,z correspondant à une commande prédéfinie stockée en mémoire.

Il est clair que, en fonction de la puissance de calcul disponible au sein du processeur 221, les algorithmes les plus performants, notamment à base d'intelligence artificielle pourront être envisagés de manière à permettre la discrimination de double ou triple tapotements effectués par les doigts d'un utilisateur sur la lampe frontale par rapport aux signaux d'accélérométrie provoqués par le mouvement de l'utilisateur (marche à pied, course, bicyclette etc...) qui seront considérés et gérés comme du « bruit » par rapport aux signaux plus rapidement de tapotements qui devront être détectés, extraits et décodés pour exécuter la commande correspondante.

## Revendications

1. Lampe frontale (100) comportant
- une source lumineuse (231) comportant une ou plusieurs diodes de type LED;
- un module de puissance (230) pour générer une alimentation en courant de ladite source lumineuse (231), ledit module de puissance étant commandé par une information ou un signal de commande;
- un module de commande (220) pour le réglage de l'intensité lumineuse générée par ladite source lumineuse;
un capteur de lumière (120) permettant de capter la lumière de l'environnement du porteur de la lampe, ledit module de commande (220) étant configuré pour générer ladite information ou ledit signal de commande en fonction de l'information générée par le capteur de lumière (120),
- un accéléromètre (110) configuré pour fournir à intervalles réguliers des données représentatives d'une accélération de la lampe frontale suivant au moins un axe horizontal et un axe vertical ;
ledit module de commande (220) comporte un circuit (221, 222, 223) configuré pour stocker et traiter numériquement les données représentatives de ladite accélération ;
**caractérisé en ce que**
- le module de commande (220) est configuré pour effectuer un traitement numérique desdites données d'accélérométrie captées suivant au moins un axe horizontal, ledit traitement numérique comportant un filtrage passe-haut dans le but de détecter un double pic intervenant dans un délai prédéfini ;
dans lequel la détection d'un double pic intervenant dans un délai prédéfini déclenche un accroissement temporaire, durant une durée prédéfini, de la luminosité de la lampe.

2. Lampe frontale selon la revendication 1 **caractérisé en ce que** ledit module de commande (220) traite les données d'accélérométrie suivant l'axe X1 pour déterminer un double pic déclenchant ledit accroissement temporaire de luminosité.

3. Lampe frontale selon la revendication 2 comprenant des moyens de communication avec un téléphone intelligent de manière à permettre la configuration de paramètres de fonctionnement et notamment le réglage de la durée prédéfinie pendant laquelle deux pics d'accélérométrie suivant l'axe X1 sont réputées être identifiés à une commande d'accroissement temporaire de luminosité.

4. lampe frontale selon la revendication 2 dans laquelle le module de commande (220) est configuré pour détecter plusieurs séries de pics rapprochées dans le but d'identifier un code de commande de la lampe frontale.

5. Lampe frontale selon la revendication 1 **caractérisé en ce que** ledit accéléromètre (110) génère des données d'accélérométrie suivant deux axes horizontaux X1, Z1 et suivant un axe vertical Y1 ; et
dans lequel le jeu de profils prédéterminés d'accélérométrie comportent des profils représentatifs de la marche, de la course à pied et de la bicyclette.

6. Un procédé de régulation lumineuse pour une lampe frontale telle que définie dans l'une des revendications précédente, comportant les étapes :
- générer (310) à intervalles réguliers un jeu de données d'accélérométrie µx , µy et µy fournies par ledit accéléromètre ;
- extraire (320) lesdites données suivant au moins un axe horizontal µx ou µy et les stocker au sein d'une mémoire vive (222);
- effectuer un traitement numérique (530) sur lesdites données stockées µx , µy comportant notamment un filtrage passe-haut dans le but de détecter une séquence de deux impulsions ou pics durant une durée prédéterminée ;
- en réponse à la dite détection, générer par ledit circuit de commande un signal de commande destiné à accroître la puissance lumineuise de la lampe ;
- lancer une temporisation (360) de manière à limiter dans le temps la durée d'accroissement de la puissance lumineuse ;
- rétablir le procédé de régulation lumineuse (370) au-delà de l'expiration de ladite temporisation ; et
- boucler sur la première étape pour procéder au traitement de nouvelles données d'accélérométrie.

7. Un procédé selon la revendication 6 dans lequel ledit traitement numérique (530) est utilisé pour effectuer le mappage des signaux d'accélérométrie avec une commande spécifique destinée à modifier le fonctionnement de la lampe frontale.

8. Un procédé selon la revendication 7 dans lequel la lampe frontale communique avec un téléphone mobile dans le but de venir paramétrer la lampe et dans lequel la communication avec le téléphone mobile permet un apprentissage de la lampe frontale pour venir associer des profils de détections de double ou triple pics dans les signaux d'accélérométrie µx , µy et µy avec des mouvements spécifiques de doigts d'un utilisateur venant tapoter la lampe frontale.

9. Un procédé selon la revendication 8 dans lequel la session de communication avec un téléphone mobile comporte :
- un mode d'apprentissage opérant hors mouvement de la lampe frontale dans lequel l'utilisateur tapote la lampe frontale au moyen de l'index et du pouce, conjointement et ce tapotage est analysé, traité et filtrer par le bloc de commande de manière à générer un vecteur d'impulsion accélérométrique de référence qui est stocké en mémoire ;
Dans lequel le vecteur d'impulsion accélérométrique de référence est associé à une commande de fonctionnement spécifique de la lampe frontale.

10. Un procédé selon la revendication 10 dans lequel, en dehors du mode d'apprentissage et durant l'utilisation de la lampe frontale, le module de commande analyse les données d'accélérométrie µx , µy et µy au moyen d'un filtrage numérique de manière à y extraire un vecteur accélérométrique susceptible d'être mappé avec un mouvement spécifique du couple index/pouce correspondant à une commande spécifique stockée en mémoire afin d'exécuter une commande correspondante extraite de la mémoire.
